# EUROPEAN PATENT APPLICATION

(11) **EP 1 764 534 A2**
(43) Date of publication of application: **21.03.2007**
(21) Application number: 06120108.3
(22) Date of filing: 05.09.2006
(51) Int. Cl.: F16J 15/32

(54) **Integrated unit having an encoder and a seal for a rolling bearing**

(30) Priority: 14.09.2005 IT TO20050624
(71) Applicant: RFT S.p.A., 10121 Torino (IT)
(72) Inventor: Marchetto, Ivano, 21040 Vedano Olona (Varese) (IT)
(74) Representative: Fioravanti, Corrado

(57) **Abstract**

The integrated unit (10) comprises an encoder (20) of plastoferrite supported by an annular rigid insert (30). A rubber body (40) is vulcanized or overmoulded on the support (30) and holds the encoder (20) stably in an annular seat (31-33) of the support (30). The rubber body (40) forms one or more static (41) and/or dynamic (42, 44) sealing lips.

## Description

The present invention relates to an integrated unit having an encoder and a seal for a rolling bearing.

Sealing devices mounted at the sides of a bearing unit in order to seal the gap between the races of the bearing are well known. Generally, these sealing devices comprise an annular discoidal metal reinforcing insert on which is overmoulded or vulcanized a gasket of rubber or soft elastomeric material which forms a first sealing lip for effecting a static seal against the stationary external race of the bearing, and one or more dynamic sealing lips suitable for sliding against the rotating inner race of the bearing or an annular shield secured thereto.

Sealing devices for bearings are also known which incorporate a phonic wheel or magnetic encoder secured to a protective metal shield mounted on the rotating race of the bearing. See, for example, patent US 6,776,420. In use, the phonic wheel faces a fixed sensor which detects the relative rotation between the outer and inner races of the bearing.

Many encoders are made of magnetizable mixtures composed of elastomers mixed with powders of ceramic materials, above all ferrites. The magnetizable mixtures enable permanent residual magnetization to be induced after the application of an intense magnetic field. Encoders of this type are produced by forming a ring of magnetizable mixture which is then vulcanized on an annular metal support insert. The polymer used for these mixtures is usually selected from NBR and HNBR, depending on the temperature range envisaged for the application of the phonic wheel. The high viscosity of these polymers makes them difficult to work and does not enable complex geometries to be produced.

Phonic wheels or encoders of plastoferrite have also been proposed. Plastoferrite has the same functional characteristics as the rubber mixtures mentioned above but uses, as the ferrite binder, a thermoplastic material, typically PA6 or PA66, which is easier to work. The plastoferrite ring is coupled to a metal reinforcing insert. The coupling does not take place at the same time as the formation of the ring but requires cold gluing by means of glues.

The phonic wheels or encoders, whether they are composed of plastoferrite or of magnetizable mixtures, are in some cases placed laterally alongside traditional sealing devices of the type discussed in the introduction.

The object of the invention is to provide a unit of compact dimensions which incorporates the functions of a phonic wheel and a sealing device for bearings and which involves low production and assembly costs. Another object of the invention is to hold the phonic wheel or encoder efficiently on the associated metal support insert.

These and other objects and advantages, which will be better understood hereinafter, are achieved according to the invention by an integrated unit as defined in the appended claims.

Some preferred but non-limiting embodiments of the present invention will now be described; reference is made to the appended drawings in which:
Figure 1 is a view in axial section of a first embodiment of a unit according to the invention; and
Figure 2 is a view in axial section of a second embodiment of a unit according to the invention.

Referring to the drawings, an integrated unit according to the invention is generally indicated 10. The unit 10 comprises a phonic wheel or encoder 20 supported by an annular metal insert 30 and held on that insert by a body 40 of rubber or elastomeric material which forms one or more sealing lips 41, 42.

The unit 10 is to be secured to the rotating race of a bearing unit (not illustrated) in such a manner as to seal laterally a gap between the stationary race and a rotating race of the bearing unit. When the unit 10 is mounted in a bearing, the encoder 20 faces, in use, an associated fixed magnetic/electrical transducer or sensor (not illustrated) forming part of a device for sensing the relative rotation between the races of the bearing. The integrated unit is, in particular, but not exclusively, to be fitted to a bearing for the hub of a motor vehicle wheel.

The encoder 20 is a discoidal annular element of plastoferrite which is magnetized or magnetizable in accordance with alternating polarities in the circumferential direction.

The encoder is accommodated in an annular seat or receptacle of the insert 30. In the preferred embodiment, this seat has a substantially C-shaped axial cross-section and is delimited by two coaxial cylindrical walls 31, 32 connected by a radial wall 33; in the example illustrated, the wall 31 is radially external, and the wall 32 is radially internal. The free ends of the cylindrical walls 31, 32 form respective circular edges 35, 36 facing in the same axial direction. The support insert 30 is shaped in such a manner as also to form an axial cylindrical extension 34 which serves to drive the integrated unit 10 forcedly onto the rotating race of the bearing.

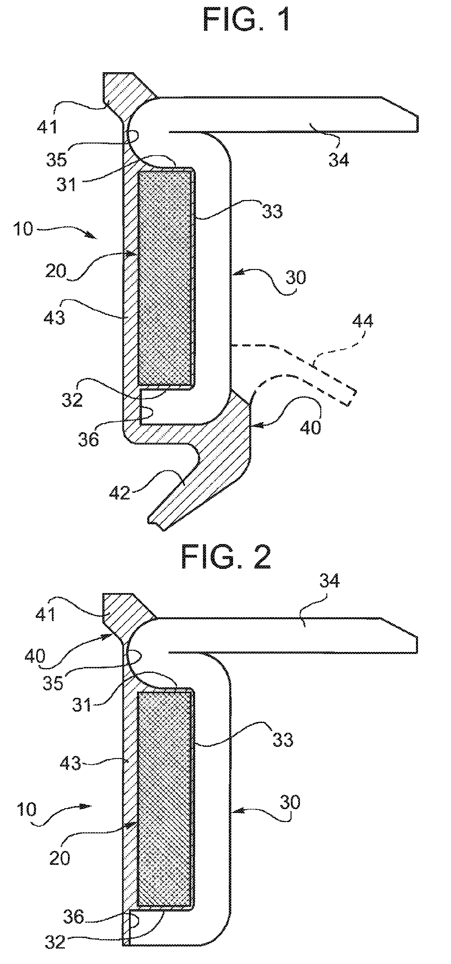

Once the encoder has been inserted in the annular seat 31-33, preferably with slight clearance, the rubber body 40 is overmoulded or vulcanized on the sub-unit made up of the encoder 20 and the insert 30. In the example illustrated in Figure 1, the body 40 forms overall
- an oblique short lip 41 in a radially outer position, suitable for effecting a static sealing action against a rotating race (not illustrated) of the bearing,
- a flexible lip 42 in a radially inner position, suitable for effecting a dynamic sealing action (in a radial direction) against a stationary race (not illustrated) of the bearing, and
- a thin covering layer 43 which is attached to the circular edges 35 and 36 of the insert and which extends radially between those edges in order to hold the encoder 20 in the annular seat 31-33.

The rubber body 40 thus fulfils the double function of clamping the encoder stably to the support insert 30 and of forming one or more static and/or dynamic sealing lips.

Before or after the overmoulding or vulcanization of the rubber body 40, the encoder 20 is polarized magnetically to form, in predetermined angular ranges or regions, a succession of suitably alternating and/or spaced north/south poles. The magnetic properties are given to the encoder by means of an apparatus which permanently magnetizes the ferrite in predetermined regions with the desired polar orientation.

The covering layer 43 is preferably continuous in order to cover the encoder 20 externally to protect it from the mud and knocks from stones and other objects coming from the nearby wheel. The layer 43 is thin, so that it does not shield the magnetic field emitted by the encoder 20 in order to enable the facing sensor or transducer to pick up magnetic signals of sufficient intensity for the correct functioning of the sensing device. As is known, during the rotation of the rotating race of the bearing, the magnetic flux linked by the transducer varies on passing through the magnetized regions of the encoder 20 facing the transducer. The transducer provides electrical pulses indicating rotation data (angular position, speed, acceleration, etc.) of the rotating race. The electrical signals made available by the transducer are transmitted to a central electronic unit and are processed by that unit in order to obtain information on the relative movement of the races.

The rubber body 40 may form other lips, such as, for example, that illustrated with a broken line marked 44 in Figure 1, which basically performs dynamic sealing functions by brushing against a stationary counterface surface (not illustrated) which is secured to or integral with the stationary race of the bearing.

It will be appreciated that the invention is not limited to the forms of construction described and illustrated here which are to be regarded as exemplary embodiments of the integrated unit. On the contrary, the invention can be modified in respect of the form and arrangement of parts, and structural and functional details. For example, those skilled in the field will appreciate that the lips of the rubber body may vary in number, shape and position in order to perform sealing actions of the static or dynamic type (sliding or "labyrinth").

## Claims

1. An integrated unit for bearings, comprising:
- a rigid annular support (30) which forms
- a means (34) for securing to a rotating race of a bearing and
- an annular seat or receptacle (31-33);
- an annular discoidal encoder of plastoferrite (20) which is magnetized or magnetizable, accommodated in the annular seat of the support (30);
- a body (40) of rubber or elastomeric material, overmoulded or vulcanized on the support (30), where the body (40) forms
- at least one circumferential sealing lip (41, 42, 44) suitable for effecting a sealing action against a component of the bearing, and
- at least one holding portion (43) which extends over the encoder (20) in order to hold it in the seat (31-33).

2. A unit according to claim 1, wherein the seat (31-33) is delimited by two coaxial cylindrical walls (31, 32) connected by a radial wall (33).

3. A unit according to claim 2, wherein the seat (31-33) has a substantially C-shaped axial cross-section.

4. A unit according to claim 2, wherein the cylindrical walls (31, 32) form respective circular end edges (35, 36) facing in the same axial direction.

5. A unit according to claim 1, wherein the securing means (34) of the annular support (30) comprises an axial cylindrical portion (34) for forcedly mounting the integrated unit (10) on a rotating race of the bearing.

6. A unit according to claim 1, wherein the holding portion (43) is overmoulded or vulcanized also on the encoder (20).

7. A unit according to claim 1, wherein the holding portion (43) includes a covering layer which is attached to two circular edges (35, 36) of the support (30) which are located in radially external and internal positions, respectively, with respect to the seat (31-33).

8. A unit according to claim 1, wherein the holding portion comprises a thin covering layer (43) which extends continuously to cover one side of the encoder (20) suitable for being directed, in use, towards an associated magneticelectrical transducer or sensor.

9. A unit according to claim 1, wherein the sealing lip of the rubber body (40) comprises at least one of the following:
- a short lip (41) suitable for effecting a static sealing action against a rotating race of the bearing;
- a flexible lip (42, 44) suitable for effecting a dynamic sealing action against a stationary annular element of the bearing.

10. A unit according to claim 1, wherein the encoder (20) is inserted with slight clearance in the seat (31-33) and the rubber body (40) is overmoulded or vulcanized on the support insert (30) and on the encoder (20) in such a manner as to fill the spaces between the encoder (20) and the seat (31-33) which accommodates it.
